(19) Europäisches Patentamt

European Patent Office

Office européen des brevets

(11) **EP 2 731 214 B1**

(12) **EUROPEAN PATENT SPECIFICATION**

(45) Date of publication and mention
of the grant of the patent:
**17.08.2016 Bulletin 2016/33**

(21) Application number: **11868956.1**

(22) Date of filing: **04.07.2011**

(51) Int Cl.:
*H01F 38/30* (2006.01)      *H02B 13/035* (2006.01)
*G01K 1/02* (2006.01)       *G01K 1/14* (2006.01)
*G01K 3/00* (2006.01)       *H02B 13/065* (2006.01)
*H01H 11/00* (2006.01)

(86) International application number:
**PCT/JP2011/065264**

(87) International publication number:
**WO 2013/005286 (10.01.2013 Gazette 2013/02)**

(54) **TEMPERATURE MONITORING DEVICE AND TEMPERATURE MONITORING METHOD**

TEMPERATURÜBERWACHUNGSVORRICHTUNG UND
TEMPERATURÜBERWACHUNGSVERFAHREN

DISPOSITIF DE SURVEILLANCE DE LA TEMPÉRATURE ET PROCÉDÉ DE SURVEILLANCE DE
LA TEMPÉRATURE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**14.05.2014 Bulletin 2014/20**

(73) Proprietor: **Mitsubishi Electric Corporation
Tokyo 100-8310 (JP)**

(72) Inventors:
• **YAMAJI, Yuichi
Tokyo 100-8310 (JP)**
• **HORI, Junji
Tokyo 100-8310 (JP)**

• **MINODA, Kyohei
Tokyo 100-8310 (JP)**

(74) Representative: **Sajda, Wolf E. et al
Meissner Bolte Patentanwälte
Rechtsanwälte Partnerschaft mbB
Postfach 86 06 24
81633 München (DE)**

(56) References cited:
**JP-A- 5 108 992       JP-A- 5 157 631
JP-A- 60 249 807      JP-A- 2006 304 523
JP-A- 2010 027 286    JP-U- 51 132 581
US-A1- 2006 076 946**

## Description

### Technical Field

The present invention relates to a temperature monitoring apparatus and a temperature monitoring method of constantly monitoring a temperature of a conductor, which is, for example, a high-voltage main circuit live part of a metal-enclosed switchgear.

### Background Art

A metal-enclosed switchgear includes a breaker, a bus bar, an instrument current transformer, an outside cable, and the like, all of which are housed inside a cabinet, and supplies power from the main bus to a load via the breaker, the instrument current transformer, and the outside cable.

A withdrawable breaker is generally employed and a circuit is formed by establishing an electrical connection between terminals of a fixed frame installed inside the cabinet and contacts of the breaker when the breaker provided with wheels is pushed into the cabinet. Hence, a high-voltage main circuit portion of the metal-enclosed switchgear is formed of a large number of connection portions and contact portions.

The connection portions of the high-voltage main circuit portion are generally fastened with bolts. Accordingly, the bolts loosened by vibration during shipment and poor fastening at the time of installation may possibly increase a contact resistance in the contact portions, which eventually gives rise to abnormal overheating.

Also, in the contact portions of the high-voltage main circuit portion, solidification of grease and entrance of foreign matter may possibly increase a contact resistance between the terminals and the contacts, which eventually gives rise to abnormal overheating as in the connection portions. A typical switchgear is described, for example, in PTL 1.

### Citation List

### Patent Literature

PTL 1: JP-A-2006-304523

### Summary of Invention

### Technical Problem

Performing maintenance on a regular basis can be one option to forestall abnormal overheating caused by an increase of the contact resistance in a large number of the connection portions and the contact portions of the conductor in the high-voltage main circuit of the metal-enclosed switchgear.

However, whether an abnormality in the connection portions and the contact portions is removed in a reliable manner cannot be indicated quantitatively. In addition, power shutdown is required to perform maintenance on a regular basis, in which case production efficiency of the entire facility drops.

It is therefore desirable to forestall abnormal overheating in the conductor by providing a temperature monitoring apparatus to the connection portions and the contact portions of the conductor in the high-voltage main circuit and monitoring an output of the temperature monitoring apparatus by wireless communication.

It is further desirable that the temperature monitoring apparatus is compact and robust. The invention is to provide a temperature monitoring apparatus and a temperature monitoring method that suit such an application,

Further attention is drawn to document US 2006/0076946 which shows the features of the preamble of claims 1 and 7.

### Solution to the Problem

A temperature monitoring apparatus of the invention includes: a temperature sensor in close proximity to a monitored conductor and measuring a temperature thereof; a substrate on which is mounted a transmitter that transmits temperature data obtained by the temperature sensor by wireless communication; a core installed so as to surround the monitored conductor; and a coil wound around the core and starting the transmitter by detecting a current passed through the monitored conductor.

The temperature sensor is held by an insulator in a clearance provided to a part of a magnetic path of the core. Locations of the monitored conductor and the core are regulated by a pair of insulator bobbins that fixes the core at both ends of the core and the coil is fit to the pair of insulator bobbins.

A temperature measuring method of the invention uses a temperature monitoring apparatus, including: a temperature sensor in close proximity to a monitored conductor and adapted to measure a temperature thereof; a substrate on which is mounted a transmitter that is adapted to transmit temperature data obtained by the temperature sensor by wireless communication; a core installed so as to surround the monitored conductor; and a coil wound around the core and adapted to start the transmitter by detecting a current passed through the monitored conductor, for calculating an actual load current value to the monitored conductor on the basis of a relation between an output voltage of the coil and a current flown to the monitored conductor and estimating a temperature at a rated current value by converting a temperature value measured by the temperature sensor at the calculated current value to a temperature value at the rated current value in accordance with an equation as follows:

$$\Delta T = (To - Tx) \times (I/Ix)n$$

wherein $\Delta T$ is a temperature rise value (K) at a rated current value I, To is an ambient temperature (°C), Tx is a temperature measurement value (°C) at an actual load current Ix, I is a rated current (A), Ix is an actual load current (A), and n is a multiplier (1.0 to 2.0).

Advantageous Effects of the Invention

According to the invention, it becomes possible to obtain a compact and robust temperature monitoring apparatus which is a temperature monitoring apparatus capable of measuring a temperature of a monitored conductor and constantly monitoring the temperature wirelessly, and with the use of this temperature monitoring apparatus, it also becomes possible to obtain a temperature monitoring method that enables reliable temperature monitoring. The invention therefore makes maintenance easier.

Brief Description of the Drawings

FIG. 1     is a front view showing a temperature monitoring apparatus according to a first embodiment of the invention.

FIG. 2     is a cross section showing the temperature monitoring apparatus according to the first embodiment of the invention.

FIG. 3     is a top view showing the temperature monitoring apparatus according to the first embodiment of the invention.

FIG. 4     shows insulator bobbins employed in the first embodiment of the invention:

FIG. 4A     is a front view,

FIG. 4B     is a side view, and

FIG. 4C     is a top view.

FIG. 5     is a flowchart depicting an operation of the invention.

FIG. 6     is a front view showing a temperature monitoring apparatus according to a second embodiment of the invention.

FIG. 7     is a cross section showing the temperature monitoring apparatus according to the second embodiment of the invention.

FIG. 8     is a top view showing the temperature monitoring apparatus according to the second embodiment of the invention.

FIG. 9     is a front view showing a temperature monitoring apparatus according to a third embodiment of the invention.

FIG. 10    is a cross section showing the temperature monitoring apparatus according to the third embodiment of the invention.

FIG. 11    is a top view showing the temperature monitoring apparatus according to the third embodiment of the invention.

FIG. 12    is a front view showing an outside power-supply coil device according to a fourth embodiment of the invention.

FIG. 13    is a front view showing a temperature monitoring apparatus according to the fourth embodiment of the invention.

FIG. 14    is a view showing a temperature rise value in a temperature monitoring apparatus according to a fifth embodiment of the invention.

FIG. 15    is a perspective view showing a combination of insulator bobbins, a high-voltage main circuit conductor, and a core employed in the invention.

Description of Embodiments

First Embodiment

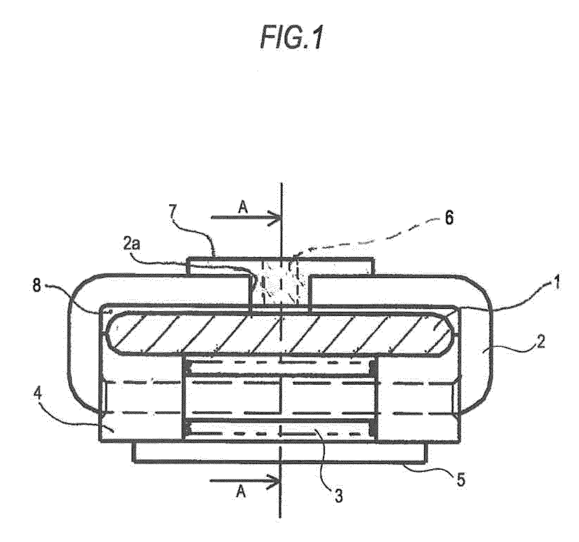

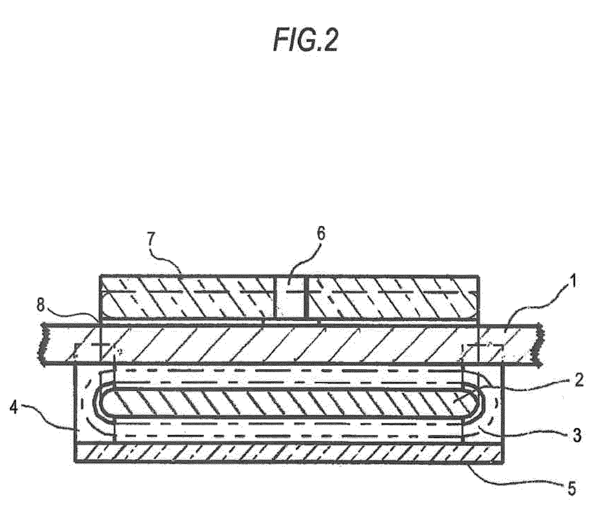

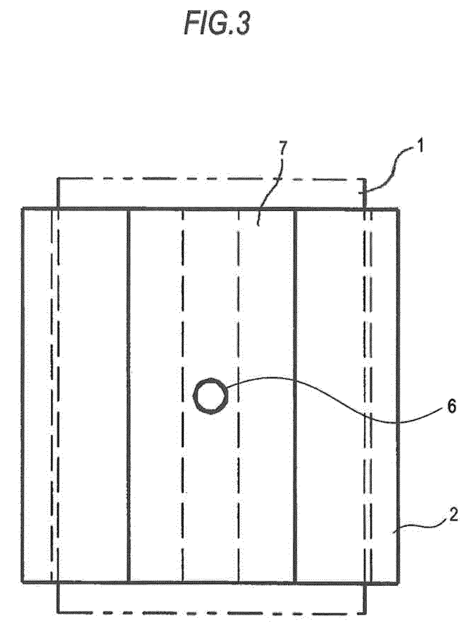

FIG. 1 through FIG. 4 and FIG. 15 show a temperature monitoring apparatus according to a first embodiment of the invention. FIG. 2 is a cross section taken along the line A-A of FIG. 1. The temperature monitoring apparatus includes a core 2 shaped substantially like a capital C when viewed from the front and installed so as to surround a high-voltage main circuit conductor 1, which is a monitored conductor.

An insulator 7 is fixed in a split clearance 2a in a C-shaped magnetic path of the core 2. A temperature sensor 6 formed, for example, of a thermistor is attached to the insulator 7. The temperature sensor 6 measures a temperature of the high-voltage main circuit conductor 1 by coming into contact with the high-voltage main circuit conductor 1.

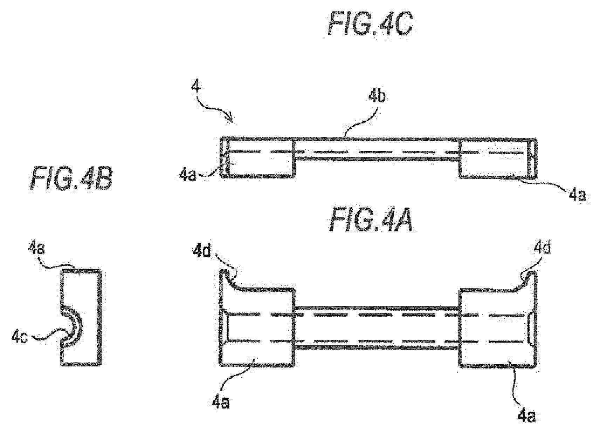

The core 2 is supported on a pair of insulator bobbins 4 formed of an insulator in such a manner that one lower side of the former is sandwiched from the both sides by the latter. As are shown in a front view of FIG. 4A, a side view of FIG. 4B, and a top view of FIG. 4C, the insulator bobbin 4 is of a flat shape and has wide portions 4a on the both sides and a connection portion 4b narrower than the wide portions 4a and connecting the wider portions 4a.

A semi-circular concave portion 4c conforming to the shape of an end of the core 2 is provided to a side surface of the wide portion 4a. Further, four semi-circular arcs 4d that receive the high-voltage main circuit conductor 1 as will be described below are provided to upper parts of the wide portions 4a on the both sides.

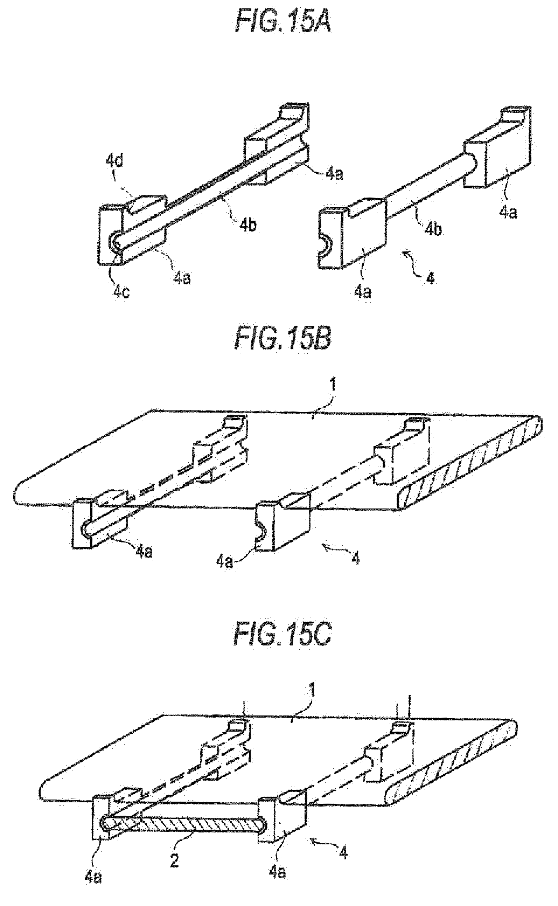

A relation among the insulator bobbins 4, the high-voltage main circuit conductor 1, and the core 2 is shown in perspective views of Figs. 15A, 15B, and 15C. Referring to FIG. 1 through FIG. 4 and FIG. 15, a pair of the insulator bobbins 4 supports the core 2 by sandwiching one side thereof from the both sides using the concave portions 4c.

Further, the insulator bobbins 4 support the high-voltage main circuit conductor 1 inserted in the core 2 from underneath in the drawings using the arcs 4d and fix the high-voltage main circuit conductor 1 in a state of being pressed against the temperature sensor 6.

The lower end of the temperature sensor 6 slightly protrudes from the lower surface of the core 2. Accordingly, the lower surface of the core 2 opposes the high-voltage main circuit conductor 1 with a gap 8 in between. A substrate 5 is fixed to the lower surfaces of the insulator bobbins 4.

In this manner, positions of the high-voltage main circuit conductor 1 and the core 2 are regulated by the insulator bobbins 4 in terms of an arrangement relation, and these members together with the substrate 5 are formed into a single piece.

A not illustrated transmitter is mounted on the substrate 5, so that temperature data obtained from the temperature sensor 6 is sent wirelessly to a receiver inside a control chamber in the switchgear board. Meanwhile, a coil 3 (indicated by a chained line in FIG. 1 and FIG. 2, and the same applies to the other drawings referred to below) wound so as to surround the core 2 is fit to the connection portion 4b of a pair of the insulator bobbins 4. An output of the coil 3 is provided to start the transmitter.

A role of the insulator bobbins 4 in the first embodiment is to position the high-voltage main circuit conductor 1 with respect to the core 2 via the gap 8 in between by supporting the high-voltage main circuit conductor 1 on the insulator bobbins 4. Another role is to fix the substrate 5. The insulator bobbins 4 further serve as a frame around which to wind the coil 3.

The split clearance 2a is provided by forming the core 2 in the shape of a capital C for the purpose of suppressing generation of heat by an eddy current occurring in the core 2 due to a current passed through the high-voltage main circuit conductor 1. Moreover, the installation position of the temperature sensor 6 is secured by exploiting the split clearance 2a. Besides a thermistor, the temperature sensor 6 can be a thermocouple, a bimetal, or the like.

An operation of the temperature monitoring apparatus will now be described. When a current is passed through the high-voltage main circuit conductor 1, which is a monitored conductor, a magnetic field develops in the core 2, and a voltage is induced across the coil 3 by the magnetic field thus developed.

The starter circuit of the transmitter is closed by supplying this voltage to the substrate 5, so that temperature data obtained from the temperature sensor 6 in contact with the surface of the high-voltage main circuit conductor 1 is sent from the transmitter by wireless communication to the receiver installed inside the control chamber in the switchgear board.

Normally, the transmitter is installed to each monitoring spot whereas one receiver is installed in the switchgear board or several receivers are installed in an array. Addresses are allocated to the receivers so as to prevent interference during data transmission and reception.

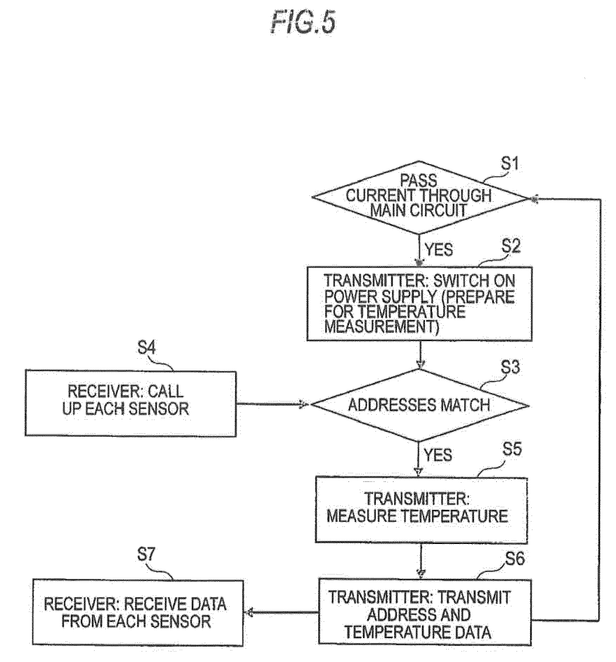

Communications between the transmitter(s) and the receiver of the temperature monitoring apparatus are depicted in the flowchart of FIG. 5. When a current is passed through the high-voltage main circuit conductor 1 and a certain current value is achieved (Step S1), the power supply of the transmitter is switched ON by a voltage across the coil 3 and the state is changed to a preparatory state for temperature measurement (Step S2). The receiver calls up addresses allocated to the respective sensors (Step S4).

After matching of the addresses has been confirmed within a certain period at the transmitter's end (Step S3), the temperature of the high-voltage main circuit conductor 1 is measured (Step S5). Thereafter, the addresses and the temperature data are transmitted to the receiver (Step S6). The data is received and saved at the receiver's end (Step S7).

The first embodiment of the invention is characterized in that it becomes possible to position the temperature sensor 6 with respect to the high-voltage main circuit conductor 1 by sandwiching the high-voltage main circuit conductor 1 with the insulator bobbins 4 and the insulator 7 having the temperature sensor 6 and provided in the clearance 2a of the core 2, and that it becomes possible to regulate the high-voltage main circuit conductor 1 and the core 2 to have an appropriate arrangement relation by fixing the substrate 5 on which is mounted the transmitter to the insulator bobbins 4.

Owing to these characteristics, a compact and robust temperature monitoring apparatus can be formed. Also, it becomes possible to know whether the high-voltage main circuit conductor 1 is in a normal state by constantly monitoring the temperature data by wireless communication.

Hence, a maintenance cycle can be prolonged for a region where the measured temperature is normal. Further, it becomes possible to previously find a sign of abnormality in the high-voltage main circuit conductor 1. Hence, maintenance can be planned before an accident occurs.

Second Embodiment

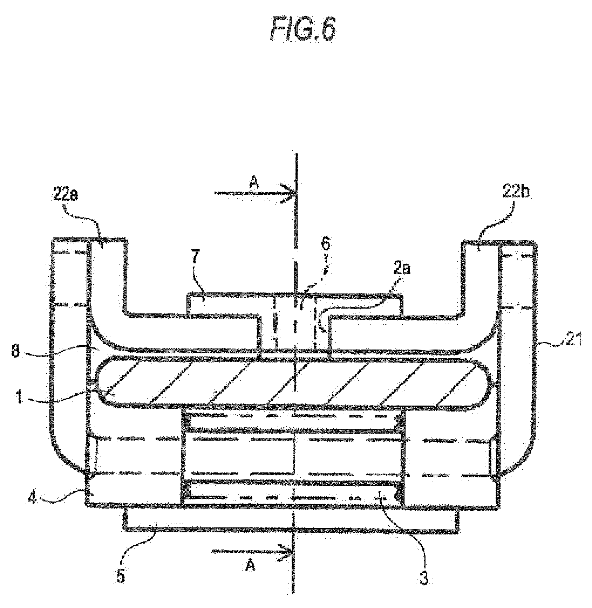

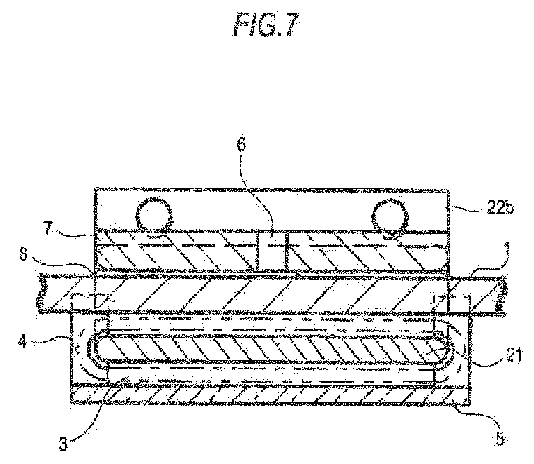

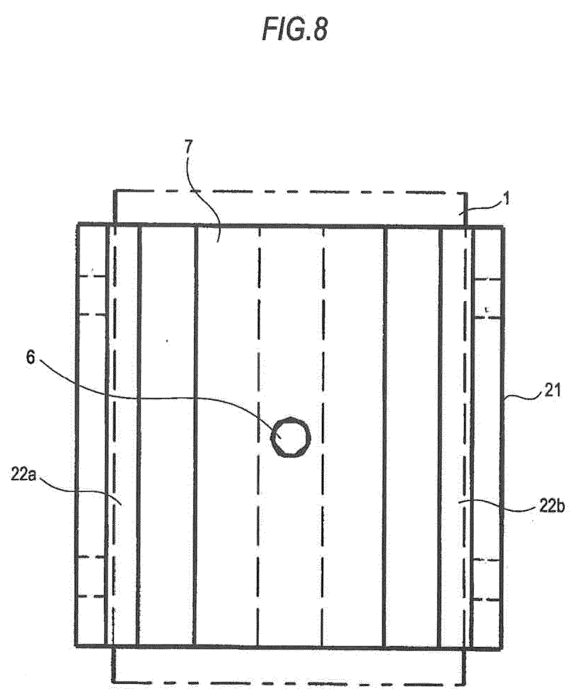

FIG. 6 is a front view of a temperature monitoring apparatus according to a second embodiment of the invention. FIG. 7 is a cross section taken along the line A-A of FIG. 6. FIG. 8 is a top view of FIG. 6. A difference between the first embodiment above and the second embodiment is that the core is divided into three parts in the second embodiment. The rest of the configuration is the same as that of the first embodiment above.

The core of the second embodiment is formed of a first core 21 shaped like a capital U when viewed from the front, and two other components: a second core 22a and a third core 22b shaped like a capital L. One side of each of the L-shaped second and third cores 22a and 22b is fixed to both ends of the first core 21 shaped like a capital U with, for example, not illustrated bolts.

A clearance 2a is provided between the second core 22a and the third core 22b and an insulator 7 is fit into this clearance 2a. Further, a temperature sensor 6 formed of a thermistor or the like is held by the insulator 7. A tip end of the temperature sensor 6 is in contact with the high-voltage main circuit conductor 1.

The high-voltage main circuit conductor 1 and the first core 21 are fixed to insulator bobbins 4, and a substrate 5 is fixed to the insulator bobbins 4. The insulator bobbins 4 are of the same structure as that in the first embodiment above. In addition, a coil 3 wound around the first core 21 is fit to the insulator bobbins 4.

The temperature monitoring apparatus of the second embodiment operates in the same manner as in the first embodiment above. That is, the transmitter mounted on the substrate 5 transmits temperature data of the temperature sensor 6 by wireless communication to the receiver, so that whether the high-voltage main circuit conductor 1 is within a normal temperature range is monitored at the receiver's end.

The second embodiment is characterized by the structure in which the core is divided into three parts, and this structure makes it possible to put the high-voltage main circuit conductor 1, the first core 21, the insulator bobbins 4, and the substrate 5 together into a single piece first and then to combine the second core 22a and the third core 22b together with the insulator 7 and the temperature sensor 6.

Owing to these characteristics, the temperature monitoring apparatus can be attached more easily to the high-voltage main circuit conductor 1. Hence, it is not necessary to remove the high-voltage main circuit conductor 1 when the temperature monitoring apparatus is attached not only to a new switchgear board but also to an existing switchgear board.

Third Embodiment

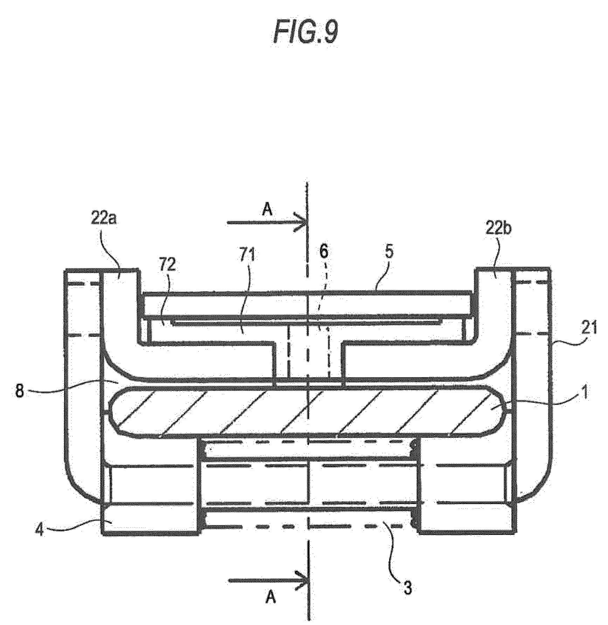

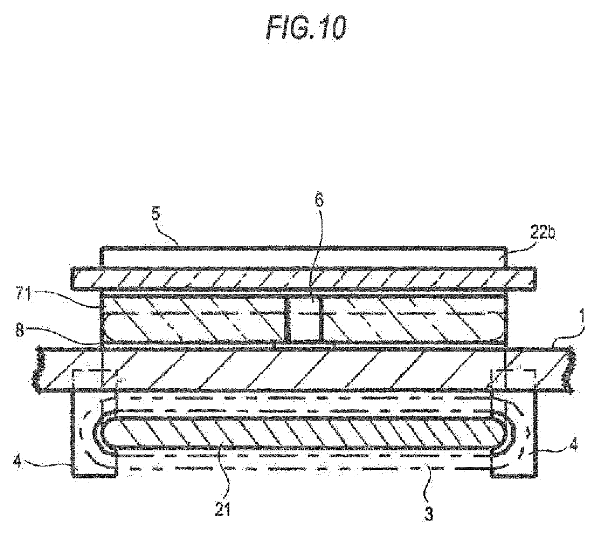

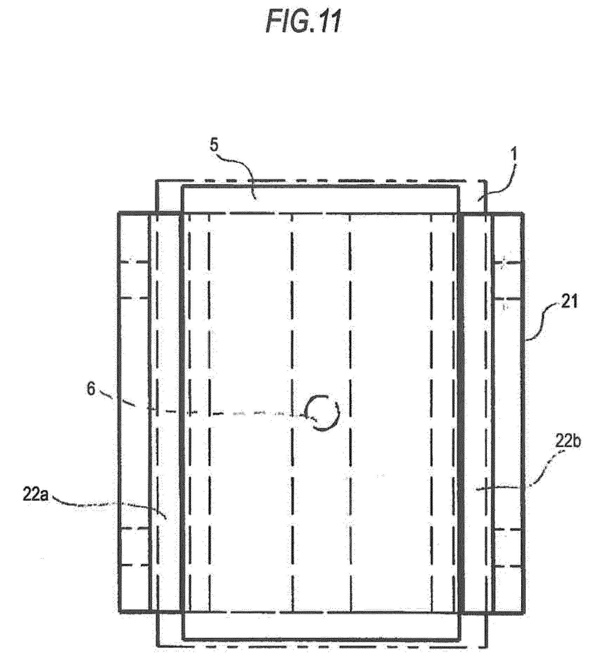

FIG. 9 through FIG. 11 show a third embodiment of the invention. FIG. 9 is a front view of a temperature monitoring apparatus. FIG. 10 is a cross section taken along the line A-A of FIG. 9. FIG. 11 is a top view of FIG. 9. The difference between the third embodiment and the second embodiment above is the installation position of the substrate 5. The substrate 5 is provided on an insulator 71 in the third embodiment.

Referring to the drawings, the insulator 71 is provided with protrusions 72 at two points on its top surface. The substrate 5 on which is mounted the transmitter is fixed onto the protrusions 72 with screws or the like. The rest of the configuration and its operation are the same as those in the first embodiment or the second embodiment above.

Owing to this configuration, it becomes possible to effectively use a space between the L-shaped second core 22a and third core 22b as a substrate housing space. Hence, dimensions of the temperature monitoring apparatus can be reduced in the height direction.

Fourth Embodiment

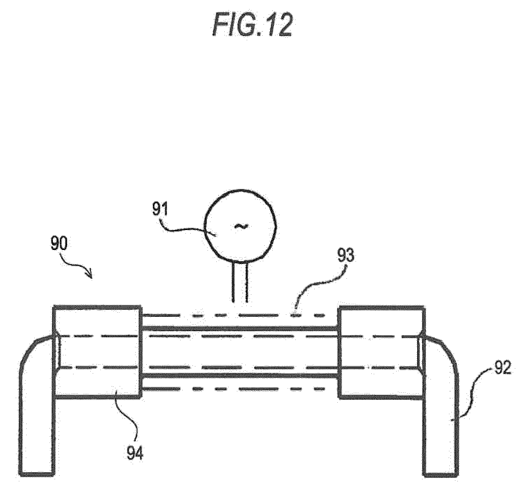

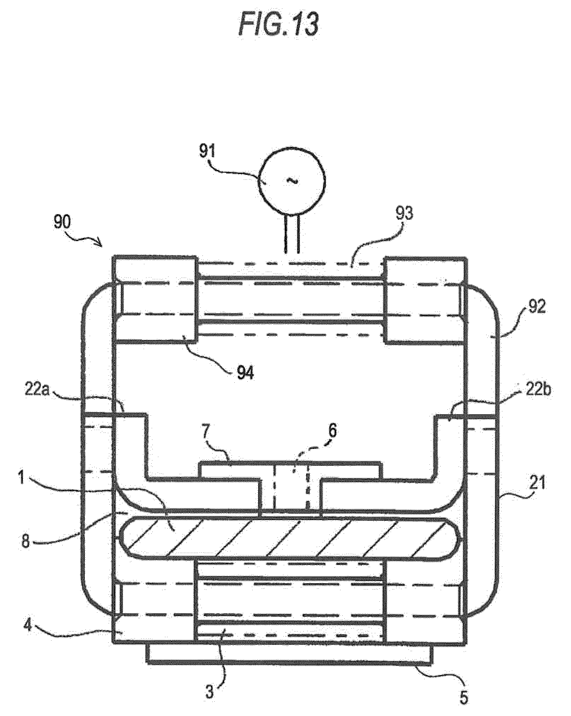

FIG. 12 and FIG. 13 show a fourth embodiment of the invention. FIG. 12 is a front view of an outside power-supply coil employed in a temperature monitoring apparatus according to the fourth embodiment of the invention. FIG. 13 is a front view showing the temperature monitoring apparatus to which the outside power-supply coil device is set.

In the first through third embodiments above, the transmitter on the substrate 5 does not start unless a current is passed through the high-voltage main circuit conductor 1. More specifically, because a current is not passed through the high-voltage main circuit conductor 1 for a shipment test or an on-site test, it is impossible to confirm as to whether the temperature monitoring apparatus itself operates normally.

To overcome this inconvenience, a power supply for a test or the like is secured by setting the outside power-supply coil device 90 shown in FIG. 12 to the temperature monitoring apparatus of the second embodiment above.

The outside power-supply coil device 90 shown in FIG. 12 is formed of an outside power-supply core 92 shaped like a capital U and having the same width as the L-shaped first core 21 shown in FIG. 6, a pair of outside power-supply insulator bobbins 94 installed at front and rear ends of the outside power-supply core 92, an outside power-supply coil 93 wound around the outside power-supply core 92 and fit to the outside power-supply insulator bobbins 94, and an outside power supply 91 that supplies the outside power-supply coil 93 with a current. The outside power-supply insulator bobbins 94 are of the same structure as the insulator bobbins 4.

For a shipment test or an on-site test conducted while a current is not passed through the high-voltage main circuit conductor 1, the outside power-supply coil device 90 is set to the temperature monitoring apparatus as is shown in FIG. 13. Then, a magnetic field is developed in the core 2 by supplying a current from the outside power supply 91, so that the transmitter on the substrate 5 is started by the field-induced voltage across the coil 3.

This configuration makes it possible to perform a test of the temperature monitoring apparatus while a current is not flown to the high-voltage main circuit conductor 1. Because the outside power-supply coil device 90 is removable, the size of the temperature monitoring apparatus is not increased by using the outside power-supply coil device 90 only when necessary.

Fifth Embodiment

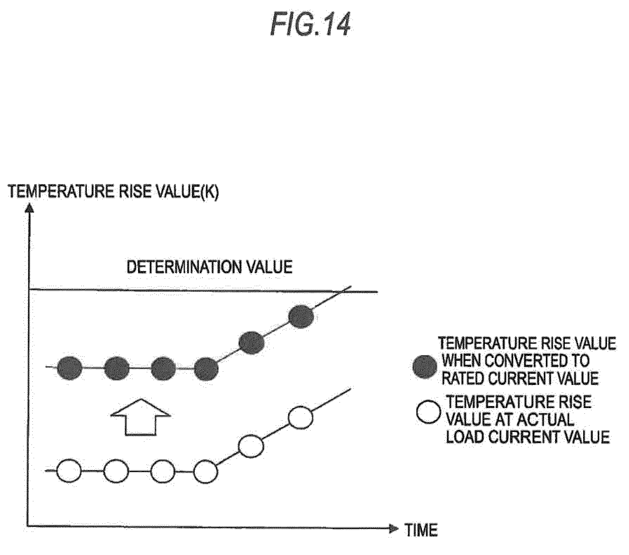

A fifth embodiment describes a temperature measuring method adopted by the temperature monitoring apparatus. FIG. 14 is a graph of data received from the temperature monitoring apparatus of the invention. Data transmitted from the transmitter's end to the receiver's end in the temperature monitoring apparatus is not limited to a temperature value of the high-voltage main circuit conductor 1 and an output voltage value of the coil 3 used to start the substrate 5 is also transmitted.

For example, given 600 A as a rated current of the high-voltage main circuit conductor 1, then in a case where an actual load current is 200 A and lower than the rated current value, a temperature value of the high-voltage main circuit conductor 1 takes a lower value as well. It is therefore impossible to determine whether the circuit is normal or abnormal on the basis of the temperature value alone.

To overcome this inconvenience, an actual load current value of the monitored conductor is calculated on the basis of an output voltage of the coil 3 and a temperature at the rated current value is estimated by converting a temperature value at the calculated current value to a temperature value at the rated current value. Then, a condition of the circuit is determined.

The determination is made on the basis of a difference between the measured temperature value in each temperature monitoring apparatus and an ambient temperature on the outside of the switchgear board, that is, a temperature rise value. The temperature rise value at the rated current value is estimated in accordance with an equation as follows:

$$\Delta T = (To - Tx) \times (I/Ix)n$$

wherein:

$\Delta T$   is a temperature rise value (K) at a rated current value I,
To   is an ambient temperature (°C),
Tx   is a temperature measurement value (°C) at an actual load current Ix,
I   is a rated current (A),
Ix   is an actual load current (A), and
n   is a multiplier (1.0 to 2.0).

List of Reference Signs

1     high-voltage main circuit conductor

2     core

2a    clearance of the core

3     coil

4     insulator bobbin

4a    wide portion

4b    connection portion

4c    concave portion

4d    arc

5     substrate

6     temperature sensor

7     insulator

8     gap

21    core

22a   core

22b   core

71    insulator

72    protrusion

90    outside power-supply coil device

91    outside power supply

92    outside power-supply core

93    outside power-supply coil

94    outside power-supply insulator bobbin

Claims

1. A temperature monitoring apparatus comprising:

- a temperature sensor (6) in close proximity to a monitored conductor (1) and adapted to measure a temperature thereof;
- a substrate (5) on which is mounted a transmitter that is adapted to transmit temperature data obtained by the temperature sensor (6) by wireless communication;
- a core (2) installed so as to surround the monitored conductor (1); and
- a coil (3) wound around the core (2) and adapted to start the transmitter by detecting a current passed through the monitored conductor (1),

the temperature monitoring apparatus being **characterized in that**:

- the temperature sensor (6) is held by an insulator (7) in a clearance (2a) provided to a part of a magnetic path of the core (2);
- locations of the monitored conductor (1) and the core (2) have been regulated by a pair of insulator bobbins (4) that fixes the core (2) at both ends of the core (2); and
- the coil (3) is fit to the pair of insulator bobbins (4).

2. The apparatus according to claim 1, **characterized in that** the substrate (5) is attached to the insulator bobbins (4).

3. The apparatus according to claim 1 or 2, **characterized in that** the monitored conductor (1) is installed with a predetermined gap (8) from the core (2).

4. The apparatus according to any one of claims 1 to 3, **characterized in that** the core (2) is installed so as to surround the monitored conductor (1) by combining a U-shaped first core (21) and L-shaped second and third cores (22a, 22b); and **in that** an insulator (71) holding the temperature sensor (6) is fixed in a clearance provided between the second core (22a) and the third core (22b).

5. The apparatus according to claim 4, when dependent on any one of claims 1 or 3, **characterized in that** the substrate (5) is attached to the insulator (71).

6. A temperature monitoring apparatus comprising an outside power-supply coil device (90) provided to the temperature monitoring apparatus set forth in claim 4, **characterized in that**:

    the outside power-supply coil device (90) includes an outside power-supply core (92) combined so as to bypass the magnetic path formed by the second core (22a) and the third core (22b), an outside power-supply coil (93) wound around the outside power-supply core (92), and an outside power-supply (91) adapted to supply the outside power-supply coil (93) with a current, and adapted to generate a voltage across the coil (3) wound around the first core (21) using the current flown to the outside power-supply coil (93).

7. A temperature measuring method, using a temperature monitoring apparatus comprising:

    - a temperature sensor (6) in close proximity to a monitored conductor (1) and measuring a temperature thereof;

- a substrate (5) on which is mounted a transmitter that transmits temperature data obtained by the temperature sensor (6) by wireless communication;
- a core (2) installed so as to surround the monitored conductor; and
- a coil (3) wound around the core (2) and starting the transmitter by detecting a current passed through the monitored conductor (1), **characterized in that** said method uses the temperature monitoring apparatus for calculating an actual load current value to the monitored conductor (1) on the basis of a relation between an output voltage of the coil (3) and a current flown to the monitored conductor (1) and said method further comprises estimating a temperature at a rated current value by converting a temperature value measured by the temperature sensor (6) at the calculated current value to a temperature value at the rated current value in accordance with an equation as follows:

$$\Delta T = (To - Tx) \times (I/Ix)n$$

wherein

    $\Delta T$ is a temperature rise value in K at a rated current I,
    To is an ambient temperature in °C,
    Tx is a temperature measurement value in °C at an actual load current Ix,
    I is a rated current in A,
    Ix is an actual load current in A, and
    n is a multiplier of 1.0 to 2.0.

**Patentansprüche**

1. Temperaturüberwachungsvorrichtung, die Folgendes aufweist:

    - einen Temperatursensor (6) in unmittelbarer Nähe zu einem überwachten Stromleiter (1), wobei der Temperatursensor (6) dazu ausgebildet ist, die Temperatur von dem überwachten Stromleiter (1) zu messen;
    - einen Träger (5), an dem ein Transmitter angebracht ist, der dazu ausgebildet ist, Temperaturdaten, die von dem Temperatursensor (6) ermittelt werden, über eine drahtlose Verbindung zu übertragen;
    - einen Kern (2), der so angebracht ist, dass er den überwachten Stromleiter (1) umschließt; und
    - eine Spule (3), die um den Kern (2) gewickelt ist und die dazu ausgebildet ist, den Transmitter durch Detektieren eines Stromes, der durch den überwachten Stromleiter (1) fließt, zu starten;

wobei die Temperaturüberwachungsvorrichtung **dadurch gekennzeichnet ist,**

- **dass** der Temperatursensor (6) mittels eines Isolators (7) in einem Freiraum (2a) gehalten ist, der in einem Bereich eines Magnetpfads des Kerns (2) vorgesehen ist;
- **dass** die Positionen des überwachten Stromleiters (1) und des Kerns (2) eingestellt sind, und zwar mit einem Paar von Isolator-Spulenkörpern (4), die den Kern (2) an beiden Enden des Kerns (2) fixieren; und
- **dass** die Spule (3) an das Paar von Isolator-Spulenkörpern (4) angepasst ist.

2. Temperaturüberwachungsvorrichtung nach Anspruch 1,
   **dadurch gekennzeichnet,**
   **dass** der Träger (5) mit den Isolator-Spulenkörpern (4) verbunden ist.

3. Temperaturüberwachungsvorrichtung nach Anspruch 1 oder 2,
   **dadurch gekennzeichnet,**
   **dass** der überwachte Stromleiter (1) in einem vorbestimmten Abstand (8) von dem Kern (2) angebracht ist.

4. Temperaturüberwachungsvorrichtung nach einem der Ansprüche 1 bis 3,
   **dadurch gekennzeichnet,**
   **dass** der Kern (2) so angebracht ist, dass er den überwachten Stromleiter (1) umschließt, und zwar durch das Kombinieren von einem U-förmigen ersten Kern (21) und von L-förmigen zweiten und dritten Kernen (22a, 22b); und
   **dass** ein Isolator (71), der den Temperatursensor (6) hält, in einem Freiraum befestigt ist, der zwischen dem zweiten Kern (22a) und dem dritten Kern (22b) vorgesehen ist.

5. Temperaturüberwachungsvorrichtung nach Anspruch 4 in Kombination mit Anspruch 1 oder 3,
   **dadurch gekennzeichnet,**
   **dass** der Träger (5) mit dem Isolator (71) verbunden ist.

6. Temperaturüberwachungsvorrichtung, die ferner eine externe Stromversorgungs-Spuleneinrichtung (90) aufweist, die mit der Temperaturüberwachungsvorrichtung nach Anspruch 4 vorgesehen ist,
   **dadurch gekennzeichnet,**
   **dass** die externe Stromversorgungs-Spuleneinrichtung (90) Folgendes aufweist: einen externen Stromversorgungskern (92), der derart kombiniert ist, dass er den Magnetpfad umgeht, der von dem zweiten Kern (22a) und dem dritten Kern (22b) gebildet wird, eine externe Stromversorgungsspule (93), die um den externen Stromversorgungskern (92) gewickelt ist, und eine externe Stromversorgung (91), die dazu ausgelegt ist, die externe Stromversorgungsspule (93) mit einem Strom zu versorgen und dazu ausgelegt ist, eine Spannung über der Spule (3) zu erzeugen, die um den ersten Kern (21) gewickelt ist, und zwar unter Verwendung des Stroms, der zu der Stromversorgungsspule (93) geflossen ist.

7. Temperaturüberwachungsverfahren, das eine Temperaturüberwachungsvorrichtung verwendet, die Folgendes aufweist:

- einen Temperatursensor (6) in unmittelbarer Nähe zu einem überwachten Stromleiter (1), wobei der Temperatursensor (6) die Temperatur des überwachten Stromleiters (1) misst;
- einen Träger (5), an dem ein Transmitter angebracht ist, der Temperaturdaten, die von dem Temperatursensor (6) ermittelt werden, über eine drahtlose Verbindung überträgt;
- einen Kern (2), der so angebracht ist, dass er den überwachten Stromleiter (1) umschließt; und
- eine Spule (3), die um den Kern (2) gewickelt ist und die den Transmitter startet, und zwar durch Detektieren eines Stromes, der durch den überwachten Stromleiter (1) fließt,

**dadurch gekennzeichnet,**
**dass** das Verfahren die Temperaturüberwachungsvorrichtung verwendet, und zwar zum Berechnen eines tatsächlichen Laststromwertes des überwachten Stromleiters (1) auf der Basis von einer Relation zwischen einer Ausgangsspannung der Spule (3) und einem Strom, der zu dem überwachten Stromleiter (1) geflossen ist, und
wobei das Verfahren ferner folgenden Schritt aufweist:

Schätzen einer Temperatur bei einem Nennstromwert durch das Umwandeln eines Temperaturwertes bei einem berechneten Stromwert, wobei der Temperaturwert von dem Temperatursensor (6) gemessen wird, in einen Temperaturwert bei dem Nennstromwert,
und zwar gemäß der folgenden Gleichung:

$$\Delta T = (To - Tx) \times (I/Ix)n$$

wobei:

$\Delta T$ = ein Temperaturanstiegswert in K bei einem Nennstrom I,
To = eine Umgebungstemperatur in °C,
Tx = ein Temperaturmesswert in °C bei einem tatsächlichen Laststrom Ix,
I = ein Nennstrom in A,
Ix = ein tatsächlicher Laststrom in A, und
n = ein Multiplikator von 1,0 bis 2,0.

## Revendications

1. Appareil de surveillance de température comprenant:

   - un capteur de température (6) à proximité étroite d'un conducteur surveillé (1) et adapté à mesurer une température de celui-ci;
   - un substrat (5) sur lequel est monté un émetteur qui est adapté à émettre des données de température obtenues par le capteur de température (6) par une communication sans fil;
   - une âme (2) installée de manière à entourer le conducteur surveillé (1); et
   - un bobinage (3) enroulé autour de l'âme (2) et adapté à démarrer l'émetteur par détection d'un courant qui passe à travers le conducteur surveillé (1),

   l'appareil de surveillance de température étant **caractérisé en ce que**:

   - le capteur de température (6) est retenu par un isolateur (7) dans un jeu (2a) prévu dans une partie d'un trajet magnétique de l'âme (2);
   - les emplacements du conducteur surveillé (1) et de l'âme (2) ont été régulés par une paire de bobines d'isolation (4) qui fixent l'âme (2) aux deux extrémités de l'âme (2); et
   - le bobinage (3) est accordé à la paire de bobines d'isolation (4).

2. Appareil selon la revendication 1,
   **caractérisé en ce que** le substrat (5) est attaché aux bobines d'isolation (4).

3. Appareil selon la revendication 1 ou 2,
   **caractérisé en ce que** le conducteur surveillé (1) est installé avec un intervalle prédéterminé (8) depuis l'âme (2).

4. Appareil selon l'une quelconque des revendications 1 à 3,
   **caractérisé en ce que** l'âme (2) est installée de manière à entourer le conducteur surveillé (1) en combinant une première âme (21) en forme de U et une seconde et une troisième âmes (22a, 22b) en forme de L; et
   **en ce qu'**un isolateur (71) qui retient le capteur de température (6) est fixé dans un jeu prévu entre la seconde âme (22a) et la troisième âme (22b).

5. Appareil selon la revendication 4, prise en dépendance de l'une quelconque des revendications 1 ou 3,
   **caractérisé en ce que** le substrat (5) est attaché à l'isolateur (71).

6. Appareil de surveillance de température comprenant un dispositif à bobinage (90) extérieur d'alimentation de puissance prévu sur l'appareil de surveillance de température selon la revendication 4,
   **caractérisé en ce que**:

   le dispositif à bobinage extérieur d'alimentation de puissance (90) inclut une âme extérieure d'alimentation de puissance (92) combinée de manière à bypasser le trajet magnétique formé par la seconde âme (22a) et la troisième âme (22b), un bobinage extérieur d'alimentation de puissance (93) enroulé autour de l'âme extérieure d'alimentation de puissance (92), et une alimentation de puissance extérieure (91) adapté à alimenter le bobinage extérieur d'alimentation de puissance (93) avec un courant, et adapté à générer un voltage à travers le bobinage (3) enroulé autour de la première âme (21) en utilisant le courant qui s'écoule vers le bobinage extérieur d'alimentation de puissance (93).

7. Procédé de mesure de température utilisant un appareil de surveillance de température comprenant:

   - un capteur de température (6) à proximité étroite d'un conducteur surveillé (1) et mesurant une température de celui-ci;
   - un substrat (5) sur lequel est monté un émetteur qui émet des données de température obtenues par le capteur de température (6) par une communication sans fil;
   - une âme (2) installée de manière à entourer le conducteur surveillé; et
   - un bobinage (3) enroulé autour de l'âme (2) et démarrant l'émetteur par détection d'un courant qui passe à travers le conducteur surveillé (1),
   **caractérisé en ce que** ledit procédé utilise l'appareil de surveillance de température pour calculer une valeur du courant de charge actuel vers le conducteur surveillé (1) en se basant sur une relation entre un voltage de sortie du bobinage (3) et un courant qui s'écoule vers le conducteur surveillé (1), et **en ce que** ledit procédé comprend en outre l'étape consistant à estimer une température à une valeur de courant nominale par conversion d'une valeur de température mesurée par le capteur de température (6) à la valeur de courant calculée en une valeur de

**EP 2 731 214 B1**

température à la valeur de courant nominale en accord avec une équation comme suit:

$$\Delta T = (To - Tx) \times (I/Ix)n$$

dans laquelle

ΔT est une valeur d'augmentation de température en K à un courant nominal I,
To est une température ambiante en degrés C,
Tx est une valeur de mesure de température en degrés C à un courant de charge actuel Ix,
I est un courant nominal en A,
Ix est un courant de charge actuel en A, et
n est un multiplicateur de 1,0 à 2,0.

## FIG.1

FIG.2

FIG.3

FIG.4C

4

4b

4a

4a

FIG.4B

4a

4c

FIG.4A

4d

4d

4a

4a

FIG.5

S1 — PASS CURRENT THROUGH MAIN CIRCUIT

YES

S2 — TRANSMITTER: SWITCH ON POWER SUPPLY (PREPARE FOR TEMPERATURE MEASUREMENT)

S4 — RECEIVER: CALL UP EACH SENSOR

S3 — ADDRESSES MATCH

YES

S5 — TRANSMITTER: MEASURE TEMPERATURE

S6 — TRANSMITTER: TRANSMIT ADDRESS AND TEMPERATURE DATA

S7 — RECEIVER: RECEIVE DATA FROM EACH SENSOR

FIG.6

FIG.7

## FIG.8

# FIG.9

FIG.10

FIG.11

FIG.12

FIG.13

# FIG.14

TEMPERATURE RISE VALUE(K)

DETERMINATION VALUE

TEMPERATURE RISE VALUE
WHEN CONVERTED TO
RATED CURRENT VALUE

TEMPERATURE RISE
VALUE AT ACTUAL
LOAD CURRENT VALUE

TIME

FIG.15A

FIG.15B

FIG.15C

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006304523 A

- US 20060076946 A